# EUROPEAN PATENT APPLICATION

(11) **EP 4 567 092 A1**
(43) Date of publication of application: **11.06.2025**
(21) Application number: 24217834.1
(22) Date of filing: 05.12.2024
(51) Int. Cl.: C10C 3/04, B01D 1/00, F23G 7/06, B65D 88/74, B01D 1/14

(54) **ASSEMBLY FOR GUIDING AIR INTO RECTIFICATION TANK OR STORAGE TANK FOR LIQUID ASPHALT, DEVICE AND METHOD**

(30) Priority: 08.12.2023 CZ 20230474
(71) Applicant: Kovosta - fluid a.s., 636 00 Brno (CZ)
(72) Inventor: Ptacek, Milan, 75301 Hranice (CZ)
(74) Representative: Zemanová, Veronika

(57) **Abstract**

Assembly for guiding air into at least one tank for liquid asphalt and/or a rectification tank (K1, K2, K3, K4) for liquid asphalt, wherein this assembly comprises:
- a first pass-through chamber (61), an inlet of which is designed to be connected to a flue gas supply from a combustion furnace (10), and in which a thermal oil heater (15) is arranged,
- a second pass-through chamber (62), an inlet of which is connected to a flue gas outlet from the first pass-through chamber (61), and in which and additional heat exchanger (16) is arranged,
- an additional piping (33), an inlet of which can be interconnected with a compressor (31), and an outlet of which is interconnected with an inlet of the additional heat exchanger (16),
- a transfer piping (34), an inlet of which is interconnected with a heated air outlet from the additional heat exchanger (16), and an outlet of which is interconnected with a pressurized air inlet piping (36) for feeding air into said tank

## Description

### Field of the Invention

The present invention relates to an assembly for guiding air into a rectification tank or a storage tank for liquid asphalt, to a device for rectification or storage of liquid asphalt and a method of heating or maintaining temperature of liquid asphalt within a tank.

### Background Art

Asphalt is used in construction, e.g. for production of tar paper or various asphalt mixtures, e.g. for roads, or for production of wrapping granulate or other technical purposes. The process of treating raw asphalt is generally known as "rectification of asphalt".

The rectification of asphalt takes place in large industrial plants commonly having a storage capacity of raw and rectified asphalt of several thousand or tens of thousands of tonnes. The entire amount of the stored asphalt is maintained in a liquid form. The asphalt treatment plants are supplied by means of tankers carrying liquid raw asphalt produced in oil treatment refineries. The refinement residue is raw asphalt. The raw asphalt is thus produced from oil which has a varying composition, i.e. the composition of the raw asphalt is also varying. To allow for using this raw asphalt in construction and in industry for various purposes, the asphalt has to be treated to ensure that the resulting products have stable properties.

The whole treatment process - rectification of asphalt - takes place when the asphalt is in a liquid state and is mostly performed in a range of temperatures from 180 °C to 240 °C. Such treatment plan thus has to include a heat source which has to operate year-long.

All gases carrying volatile compounds appearing during filling, repumping and further manipulation of storage tanks, and also gases from technological processes of asphalt rectification, have to be guided into a combustion device in which they have to undergo a process of combustion, wherein said gases are burned/decomposed by means of oxidation and lose their unpleasant smell.

The rectification of asphalt commonly comprises a removal of undesired, mostly volatile, compounds, and an admixture of various additives for adjusting its properties.

Compressed air produced in large compressor stations is used for removal of undesired components, for oxidation of some of the volatile components and for mixing of the asphalt, said air being forced through an inlet pressure piping with nozzles into so-called rectification towers in which said rectification of asphalt takes place.

The compressed air is usually guided through a pipe in an interior space of the rectification tank to the bottom, wherein this compressed air enters the liquid asphalt by means of said nozzles and rises through the asphalt to a upper region of the rectification tank.

After fulfilling its purpose in the rectification, i.e. after passing through the asphalt, the compressed air forms a gas mixture which comprises various combustible and non-combustible compounds, accumulates in the upper region of the tank and is guided from the rectification tanks through (oil) cooling columns into a combustion furnace in which it is burned along with other fuel. Therethrough, a removal/combustion of various volatile/aromatic compounds and their decomposition takes place.

The energy resulting from a combustion of fuel oil or natural gas with the gas mixture is used for a technological heating of the asphalt which is heated by means of heat-carrying medium, said heat-carrying medium being a thermal oil.

The temperature of the above-mentioned gas mixture corresponds to the temperature of the asphalt, usually up to 240 °C, and said gas mixture is immediately cooled in oil cooling columns, or rather oil showers, in which the oil, usually having a temperature of 100 °C, cools the leaving air/gas mixture to a temperature of about 100 °C.

As a result of the simultaneous combustion of oil and/or natural gas and the gas mixture having a temperature of about 100 °C, flue gas emerges in the combustion furnace, wherein said flue gas heats the thermal oil in the thermal oil heating vessel from temperatures of about 210 °C to temperatures of about 240 °C. The heated thermal oil is brought into heat-transferring coils immersed in the rectification towers or tanks in which it heats the asphalt or asphalt mixtures.

The group of devices for rectification of asphalt including the group of storage tanks for asphalt is in operation year-long and the asphalt stored therein is heated to a temperature or maintained at a temperature of, generally, above 170 °C to keep the asphalt in its liquid state.

The total energy-mass balance of the process is such that the compounds obtained by the passage of the air through the liquid asphalt and the air needed for the combustion of natural gas or, more commonly, fuel oil, ensures that the final surplus of air/oxygen downstream of the combustion device is approximately 14 - 17 %. The temperature of the leaving flue gas downstream of the oil exchanger is from 270 to 355 °C. The thermal efficiency of this system generally does not exceed 50 %.

It is common for such or similar technological heaters, commonly also known as convection heaters, in which it is required for technological reasons to maintain constant high temperatures of the given processed material, to have a very low efficiency, usually up to 50 %.

Pre-heating of the input material is used to enhance the efficiency of such systems and thus to reduce the temperature of the residual heat of the flue gases.

If the input material is molten asphalt, its transport temperature always exceeds 170 °C.

In asphalt rectification plants, no material or compounds are accepted which could cool the flue gases in order to significantly enhance the efficiency of the system.

The consumption of other media, e.g. warm industrial water and heat for heating of buildings in the respective industrial plants is entirely negligible and cannot be used for a significant increase of the efficiency of the system.

Essentially all oil refineries and oil products refineries produce waste high-potential heat which is usually discharged into the environment or is cooled by means of various additional methods. The most common cooling method is a cooling of the respective waste medium by water in cooling towers. These methods do not lead to increase of efficiency of the systems.

The aim of this invention is to enhance the efficiency of a system of technological heating of asphalt.

### Summary of the Invention

The above-mentioned aim is achieved by an assembly for guiding air into at least one tank, said tank being a storage tank for liquid asphalt or a rectification tank for liquid asphalt, when heating or maintaining the temperature of a liquid asphalt in said tank, wherein said assembly comprises:
- a first pass-through chamber, an inlet of which is designed to be connected to a flue gas supply from a combustion furnace, and in which a thermal oil heater is arranged,
- a second pass-through chamber, an inlet of which is connected to a flue gas outlet from the first pass-through chamber, and in which and additional heat exchanger is arranged,
- an additional piping, an inlet of which can be interconnected with a compressor, and an outlet of which is interconnected with an inlet of the additional heat exchanger,
- a transfer piping, an inlet of which is interconnected with a heated air outlet from the additional heat exchanger, and an outlet of which is interconnected with a pressurized air inlet piping for feeding air into said tank, the tank being a storage tank for liquid asphalt and/or a rectification tank for liquid asphalt.

The above-mentioned aim is also achieved by a device for rectification and/or storage of asphalt which comprises the above-mentioned assembly,
- at least one storage tank, said tank being a storage tank for liquid asphalt or a rectification tank for liquid asphalt, wherein the pressurized air inlet piping opens into a bottom or near a bottom of the tank,
- a discharge piping which is, with its inlet, interconnected with an upper region of an interior space of the tank, and which is, with its outlet, interconnected with an inlet piping for a gas mixture for guiding the gas mixture from an upper region of the tank into a combustion furnace, and
- a combustion furnace provided with a burner, wherein the inlet piping opens into said combustion furnace.

This device as a technological unit also comprises
- an after-combustion chamber which is, with its inlet, interconnected with a flue gas outlet from the combustion furnace, and which is, with its outlet, interconnected with a flue gas inlet into the first pass-through chamber.

The combustion furnace is preferably at least partially surrounded by a membrane wall, wherein an inlet of the membrane wall is interconnected with an outlet of the thermal oil heater and an outlet of the membrane wall is interconnected with a heating body arranged in the tank,
and/or
the thermal oil heater is at least partially surrounded by a membrane heat exchanger assembly, wherein an inlet of the heat exchanger assembly is interconnected with an outlet of the thermal oil heater (15) and an outlet of the heat exchanger assembly is interconnected with a heating body arranged in the tank.

In a preferred embodiment, the device also comprises:
- an exhaust piping which is, with its inlet, interconnected with the second pass-through chamber, and which is, with its outlet, interconnected with a chimney, wherein the exhaust piping is provided with a branch piping through which it is interconnected with a feeding piping via a combustion air blower, wherein said feeding piping is, with its outlet, interconnected with the burner.

Preferably, a supplementary heat exchanger is arranged in the second pass-through chamber, wherein an outlet of said supplementary heat exchanger is interconnected with the branch piping.

The above-mentioned aim is also achieved by a method of heating or maintaining of temperature of liquid asphalt in a tank, said tank being a storage tank for liquid asphalt and/or a rectification tank for liquid asphalt, wherein this method comprises the following steps:
- flue gases from a combustion furnace are guided along walls of a thermal oil heater and heat thermal oil which is guided into heating bodies, said heating bodies heating asphalt in a tank,
- after passing along the walls of the thermal oil heater, the flue gases are guided along walls of an additional heat exchanger and heat pressurized air within the additional heat exchanger, and said pressurized air is guided from the additional heat exchanger to a lower region of the tank and bubbles through the asphalt, and
- gases from an upper region of the tank are guided to the combustion furnace to be combusted therein.

In a preferred embodiment, after passing along the walls of the additional heat exchanger, the flue gases are guided along walls of a supplementary heat exchanger and heat air within said supplementary heat exchanger, said air being guided from the supplementary heat exchanger to the burner of the combustion furnace.

In a preferred embodiment, after passing along the walls of the additional heat exchanger or the supplementary heat exchanger, a portion of the flue gases is guided to the burner of the combustion furnace.

The thermal oil is preferably guided from the thermal oil heater to a further heating, and only after that is guided to the heating bodies which heat the asphalt in the tank.

### Drawings

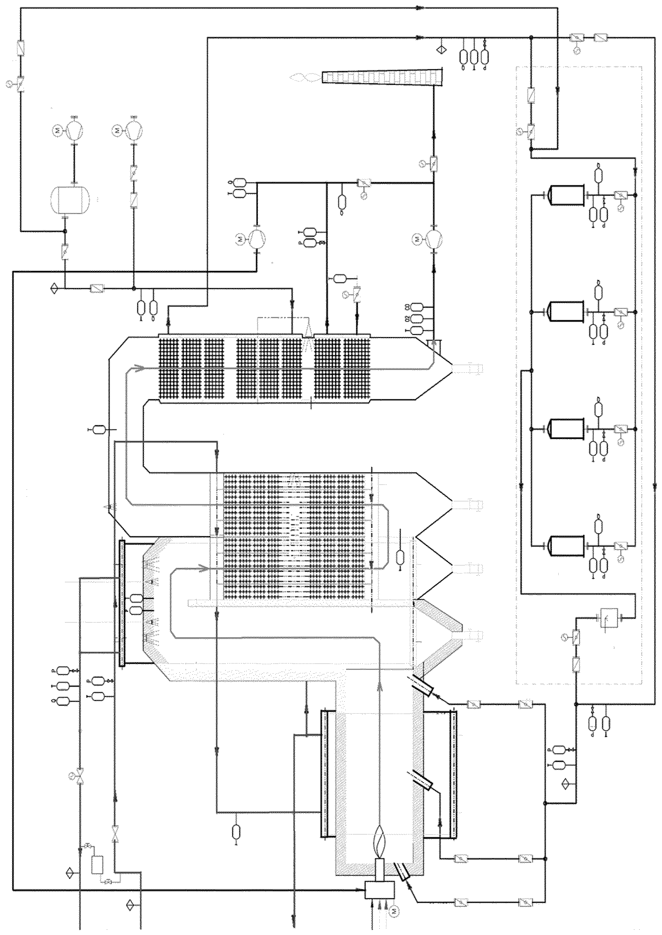

The invention is described in more detail based on an exemplifying embodiment which is schematically depicted in the appended drawing.

### Embodiments of the Invention

The assembly depicted in the drawing comprises a group of rectification towers K1 to K4 which are, in their upper region, interconnected with a discharge piping 21 n, said discharge piping opening into an oil shower 23. An inlet piping 25 is connected to the oil shower 23, wherein said inlet piping 25 branches and its inlet branches then open into the interior of a combustion furnace 10.

Its inlet branches preferably open into several levels such that, in the combustion furnace 10, each of the inlet branches forms a coaxially arranged rim along its circumference, and is provided with several nozzles arranged with a uniform mutual angular spacing, wherein the direction of the nozzles comprises a tangential component to produce a vortex, thus thoroughly mixing the gas mixture from upper regions of the tanks K1 to K4 with the fuel fed by a burner 13.

The combustion furnace 10 essentially has a shape of a horizontally arranged cylinder whose interior walls are formed by lining 11 and is surrounded by a membrane wall 12 from the outer side.

The membrane wall 12 is a group of pipes which are mutually interconnected by means of strip metal and together form a gas-tight casing, wherein oil flows through said pipes. The membrane wall 12 is connected to a thermal oil heater 15.

The membrane wall is a part of a preferred embodiment and is not essential for the invention.

A burner 13 is arranged at one end of the combustion furnace 10. In this specific embodiment, the burner 13 is a double-fuel burner for combustion of oil and gas.

At the opposite end, the combustion furnace 10 opens into an after-combustion chamber 14 in the form of a vertical cylinder whose upper region, i.e. a flue gas discharge region, is connected to a first pass-through chamber 61.

In the first pass-through chamber 61, wherein said chamber has a U-shaped curved longitudinal axis in the present embodiment, a thermal oil heater 15 is arranged. The thermal oil heater 15 is formed by tube-like and/or membrane systems arranged in the trajectory of the flue gas and designed for guiding the heated thermal oil and for conveying the heat from the flue gas to the oil.

A flue gas outlet from the first pass-through chamber 61 opens into a second pass-through chamber 62 in which an additional heat exchanger 16 is arranged, wherein a supplementary heat exchanger 17 is arranged downstream of the additional heat exchanger 16 and, downstream of said supplementary heat exchanger 17, a flue gas discharge opens into a chimney 100 through a flue gas blower 18 and a flue gas exhaust piping 19.

The additional heat exchanger 16 as well as the supplementary heat exchanger 17 are formed by tube-like and/or membrane systems for guiding of the heated air.

The assembly furthermore comprises a compressor 31 which is interconnected to an additional piping 33 via a pressurized air tank 32, wherein said additional piping 33 opens into a system for guiding of heated pressurized air in the additional heat exchanger 16.

The outlet of the heated pressurized air from said additional heat exchanger 16 opens into a transfer piping 34 for the heated pressurized air, wherein said transfer piping 34 branches out to a interconnecting piping 35 which opens into a inlet piping 25 for the gas mixture, and to a inlet piping 36 for pressurized air which is intended to input the heated rectification pressurized air and which, in this embodiment, branches out to partial branches and the individual partial branches are interconnected with inlets for rectification air into the rectification tanks K1 to K4.

In the depicted preferred embodiment, the assembly further comprises a bypass piping 40 which interconnects the outlet of the air tank 32 with the pressurized air inlet piping 36.

In the illustrated preferred embodiment, the supplementary heat exchanger 17 is connected to the surrounding air with its inlet, and is connected to the feeding piping 51 with its output via a combustion air blower 50, said feeding piping 51 opening into the burner 13 with its outlet.

In the illustrated preferred embodiment, a branch pipe 52 is arranged downstream of the flue gas blower 18, said branch pipe optionally interconnecting the exhaust piping 19 with the inlet on the intake portion of the combustion air blower 50.

In the rectification tanks K1 to K4, non-depicted heating bodies comprising thermal oil are arranged, e.g. heat-transferring coils for heating of asphalt. The outlet of the heating bodies comprising thermal oil is interconnected with the inlet of the of the thermal oil heater 15 whose outlet for oil is interconnected with the inlet of the membrane wall 12 of the combustion furnace 10 and the inlet of a (not depicted) membrane exchanger assembly which surrounds the thermal oil heater 15. The outlet of oil from the membrane walls 12 and the membrane exchanger assembly surrounding the thermal oil heater 15 opens into a (not depicted) heating assembly which heats the rectification towers K1 to K4 and/or (not depicted) storage tanks by means of heating bodies comprising thermal oil, wherein the outlet of the heating bodies comprising thermal oil is interconnected with the thermal oil heater 15.

The assembly further comprises sensors and measurement devices for measurement of temperature, flow rate and pressure in various locations of the assembly, particularly temperature sensors T, pressure sensors P, flow rate sensors Q, oxygen content sensors O2, nitrogen oxides content sensor NOx and carbon monoxide content sensors CO.

In a preferred embodiment, the system further comprises a supplementary air blower 39 which opens into the additional piping 33 via a regulating piping.

In the above-mentioned pipelines and pipeline branches, valves and flaps for a selective opening and closing of the respective pipelines and pipeline branches.

The assembly functions as follows:
Within the rectification tanks K1 to K4 and/or within the storage tanks, asphalt is heated by means of heating bodies, or rather heat-transferring coils, through which the heated thermal oil flows.

In the upper regions of the rectification tanks K1 to K4, the gas mixture formed by passage of the pressurized air through the liquid asphalt accumulates, or rather the gas mixture from the upper regions of the rectification tanks K1 to K4, which is drained by the discharge piping 21 to the oil shower 23 in which it is cooled to a temperature of approximately 100 °C, and is further guided to the inlet piping 25 for the gas mixture in which it branches out to individual branches by means of which it is fed to the interior of the combustion furnace 10.

Simultaneously, oil and/or gas is fed by the burner to the combustion furnace 10, said oil and/or gas being burned in the combustion furnace 10 along with the gas mixture fed by the inlet piping 25 for gas mixture.

The flue gases from the combustion furnace 10 are guided through the after-combustion chamber 14 to the first pass-through chamber 61 in which they pass along the surfaces of the thermal oil heater 15; in a preferred embodiment, they also pass along the membrane walls surrounding the thermal oil heater 15, thus heating the thermal oil.

The flue gases are guided from the first pass-through chamber 61 to the second pass-through chamber 62 in which they pass along the surfaces of the additional heat exchanger 16 and, in the illustrated embodiment, subsequently pass along the surfaces of the supplementary heat exchanger 17.

From the second pass-through chamber 62, the flue gases are guided through the flue gas blower 18 which ensures a required pull, and are subsequently guided through the exhaust piping 19 into the chimney 100.

Upstream of the flue gas blower 18, required variables are measured by means of the temperature sensor T, oxygen content sensor O2 and monoxide content sensor CO.

A part of the flue gas, up to 80 vol. % of the flue gas as need may be, can be guided along the branch pipe 52 and then through the feeding piping 51 to the burner 13. This optional discharge is regulated by a (not depicted) regulation unit which controls a closing-regulating flap in the branch pipe 52 and/or a closing-regulating flap in the exhaust piping 19 and/or a closing-regulating flap which is in the suction piping 80 for suction of air into the supplementary heat exchanger 17.

The thermal oil heated by the thermal oil heater 15 in the first pass-through chamber 61 is guided into the membrane wall 12 of the combustion furnace 10 or eventually into the membrane wall surrounding the thermal oil heater 15, in which its temperature further rises, and is subsequently guided into a (not depicted) heating device in which the temperature is increased such that it exceeds approximately 240 °C. Afterwards, the thermal oil is guided into the heat-transferring coils in the rectification tanks K1 to K4 and/or to the heat-transferring coils in the (not depicted) asphalt storage tanks in which it heats the asphalt and subsequently is guided to the thermal oil heater 15 in the first pass-through chamber 61.

The compressor 31 produces pressurized air which is fed through the pressurized air tank 32 via the additional piping 33 into the additional heat exchanger 16 in which it is heated by the flue gases. Afterwards, it is guided through the transfer piping 34 and the inlet piping 36 for pressurized air, or rather through its inlet branches to the individual rectification tanks K1 a K4, and forced through nozzles near the bottom into the liquid asphalt.

By bubbling through the asphalt, this air mixes the asphalt and accumulates in the upper region together with other aromatic and other volatile compounds. This gas mixture is guided from said upper region through the discharge piping 21.

By action of the combustion air blower 50, air heated by the flue gases is let into the supplementary heat exchanger 17, said air being heated by the flue gases and subsequently guided through the feeding piping 51 into the burner 13. The air heated in the supplementary heat exchanger 17 can mix with the flue gases fed by the branch pipe 52 from the exhaust piping 19 as described above, particularly in accordance with the amount of air which needs to be fed into the combustion furnace 10.

As a result of the fact that air heated to approximately 170 to 200 °C is fed into the rectification tanks K1 to K4, said air essentially does not reduce the temperature of the asphalt and does not draw energy therefrom, as was the case in the technical solutions known in the art. As a result, less energy is required for heating the asphalt or rather maintaining its temperature. The efficiency of the whole system thus increases.

Thanks to the supplementary heat exchanger 17, the heat from the flue gases is recovered into the combustion chamber 10 which likewise enhances the efficiency of the system.

Thanks to the recirculation of the flue gases, the amount of flue gases leaving to the chimney is increased. This also enhances the efficiency of the system. The recirculation of flue gases likewise reduces the amount of arising NOx and the total amount of emissions discharged into the surrounding environment.

In comparison with the solutions known in the art, no adhesions appear on the nozzles or on the pipes for feeding of air into the rectification tanks K1 to K4, because the differences between the temperatures of asphalt and the temperatures of the fed air in the nozzles or pipes are minimal.

The individual parts of the assembly illustrated in the drawings, e.g. the sensors, the valves, the compressor, the burner, the air blowers, the closing flaps etc. are preferably interconnected with a (not depicted) control unit for controlling the entire system or at least the given assembly.

Although a particularly preferable embodiment of the invention has been described, it is evident that a person skilled in the art readily finds other possible alternatives to this embodiment. The scope of protection thus is not limited to this embodiment but is rather defined by the appended patent claims.

For example, it is possible to use the air heated in the additional heat exchanger 16 to heat or maintain the temperature of the liquid asphalt in the storage tank for liquid asphalt as an alternative to being used in the above-described rectification tanks K1 to K4.

It is equally clear that the number of rectification towers K1 to K4, and eventually also the storage tanks for liquid asphalt, is arbitrary.

## Claims

1. Assembly for guiding air into at least one tank, said tank being a storage tank for liquid asphalt and/or a rectification tank (K1, K2, K3, K4) for liquid asphalt, when heating or maintaining the temperature of the liquid asphalt in said tank, wherein said assembly comprises:
- a first pass-through chamber (61), an inlet of which is designed to be connected to a flue gas supply from a combustion furnace (10), and in which a thermal oil heater (15) is arranged,
**characterised in that** it further comprises
- a second pass-through chamber (62), an inlet of which is connected to a flue gas outlet from the first pass-through chamber (61), and in which and additional heat exchanger (16) is arranged,
- an additional piping (33), an inlet of which is adapted for being interconnected with a compressor (31), and an outlet of which is interconnected with an inlet of the additional heat exchanger (16),
- a transfer piping (34), an inlet of which is interconnected with a heated air outlet from the additional heat exchanger (16), and an outlet of which is interconnected with a pressurized air inlet piping (36) for feeding air into said tank, the tank being the storage tank for liquid asphalt and/or the rectification tank (K1, K2, K3, K4) for liquid asphalt.

2. Device for rectification and/or storage of asphalt, **characterised in that** it comprises
- the assembly of claim 1,
- at least one tank, said tank being the storage tank for liquid asphalt and/or the rectification tank (K1, K2, K3, K4) for liquid asphalt, wherein the pressurized air inlet piping (36) opens into a bottom or at the bottom of the tank,
- a discharge piping (21) which is, with its inlet, interconnected with an upper region of an interior space of the tank, and which is, with its outlet, interconnected with an inlet piping (25) for a gas mixture for guiding the gas mixture into a combustion furnace (10), and
- a combustion furnace (10) provided with a burner (13), wherein the inlet piping (25) opens into said combustion furnace (10).

3. Device according to claim 2, **characterised in that** it comprises
- an after-combustion chamber (14) which is , with its inlet interconnected with a flue gas outlet from the combustion furnace (10), and which is, with its outlet, interconnected with a flue gas inlet into the first pass-through chamber (61).

4. Device according to claim 2 or 3, **characterised in that** the combustion furnace (10) is at least partially surrounded by a membrane wall (12), wherein an inlet of the membrane wall (12) is interconnected with an outlet of the thermal oil heater (15) and an outlet of the membrane wall (12) is interconnected with a heating body arranged in the tank,
and/or
the thermal oil heater (15) is at least partially surrounded by a membrane heat exchanger assembly, wherein an inlet of the heat exchanger assembly is interconnected with an outlet of the thermal oil heater (15) and an outlet of the heat exchanger assembly is interconnected with a heating body arranged in the tank.

5. Device according to claim 3 or 4, **characterised in that** it comprises:
- an exhaust piping (19) which is, with its inlet, interconnected with the second pass-through chamber (62), and which is, with its outlet, interconnected with a chimney (100), wherein the exhaust piping (19) is provided with a branch piping (52) through which it is interconnected with a feeding piping (51) via a combustion air blower (50), wherein said feeding piping (51) is, with its outlet, interconnected with the burner (13).

6. Device according to claim 5, **characterised in that** a supplementary heat exchanger (17) is arranged in the second pass-through chamber (62), wherein an outlet of said supplementary heat exchanger (17) is interconnected with the branch piping (52).

7. Method of heating or maintaining of temperature of liquid asphalt in a tank, said tank being a storage tank for liquid asphalt and/or a rectification tank (K1, K2, K3, K4) for liquid asphalt, wherein this method comprises the following steps:
- flue gases from a combustion furnace (10) are guided along walls of a thermal oil heater (15) and heat thermal oil which is guided into heating bodies, said heating bodies heating asphalt in the tank,
**characterised in that**
- after passing along the walls of the thermal oil heater (15), the flue gases are guided along walls of an additional heat exchanger (16) and heat pressurized air within the additional heat exchanger (16), and said pressurized air is guided from the additional heat exchanger (16) into a lower region of the tank and bubbles through the asphalt, and
- gases from an upper region of the tank are guided to the combustion furnace (10) to be combusted therein.

8. Method according to claim 7, **characterised in that** after passing along the walls of the additional heat exchanger (16) the flue gases are guided along walls of a supplementary heat exchanger (17) and heat air within said supplementary heat exchanger (17), said air being guided from the supplementary heat exchanger (17) to the burner (13) of the combustion furnace (10).

9. Method according to claim 7 or 8, **characterised in that** after passing along the walls of the additional heat exchanger (16) or the supplementary heat exchanger (17), a portion of the flue gases is guided to the burner (13) of the combustion furnace (10).

10. Method according to anyone of claims 7 to 9, **characterised in that** the thermal oil is guided from the thermal oil heater (15) to a further heating, and only after that is guided to the heating bodies which heat the asphalt in the tank.
